Europäisches Patentamt

European Patent Office

Office européen des brevets

(19)

(11) Veröffentlichungsnummer: **0 009 556**
**B1**

(12) **EUROPÄISCHE PATENTSCHRIFT**

(45) Veröffentlichungstag der Patentschrift: **19.05.82**

(21) Anmeldenummer: **79102598.4**

(22) Anmeldetag: **23.07.79**

(51) Int. Cl.³: **C 08 J 9/20**, C 08 L 25/04, C 08 K 5/02

(54) Feinteilige expandierbare Styrolpolymerisate, enthaltend geringe Mengen organischer Bromverbindungen zur Verminderung der Formverweilzeit, Verfahren zur Herstellung und Verwendung zur Herstellung von Schaumstoffkörpern.

(30) Priorität: **16.09.78 DE 2840355**

(43) Veröffentlichungstag der Anmeldung:
**16.04.80 Patentblatt 80/8**

(45) Bekanntmachung des Hinweises auf die Patenterteilung:
**19.05.82 Patentblatt 82/20**

(84) Benannte Vertragsstaaten:
**BE DE FR GB IT NL SE**

(56) Entgegenhaltungen:
**DE - A - 2 430 623
DE - A - 2 542 281**

(73) Patentinhaber: **CHEMISCHE WERKE HÜLS AG
Postfach 1320
D-4370 Marl 1 (DE)**

(72) Erfinder: **Rigler, Josef Karl, Dr.
Helgolandstrasse 16
D-4350 Recklinghausen (DE)**
Erfinder: **Leithäuser, Horst, Dr.
Langehegge 151
D-4370 Marl (DE)**
Erfinder: **Trukenbrod, Karl, Dr.
Leunaer Strasse 32
D-4370 Marl (DE)**
Erfinder: **Ogrzewalla, Werner
Cranachweg 8
D-4270 Dorsten 11 (DE)**

Courier Press, Leamington Spa, England.

Feinteilige expandierbare Styrolpolymerisate, enthaltend geringe Mengen
organischer Bromverbindungen zur Verminderung der Formverweilzeit, Verfahren
zur Herstellung und Verwendung zur Herstellung von Schaumstoffkörpern

Nach einem Verfahren, das sich in der Technik besonders gut eingeführt hat, stellt man Formkörper durch Expandieren feinteiliger, schäumfähiger Styrolpolymerisate in Formen her (H. L. v. Cube und K. E. Pohl: "Die Technologie des schäumbaren Polystyrols" (1965)). Bei diesem Verfahren werden die feinteiligen Styrolpolymerisate zunächst mit Wasserdampf oder heißen Gasen auf Temperaturen oberhalb ihres Erweichungspunktes erhizt, so daß ein Aufschäumen zu diskreten Teilchen eintritt. Dieser Arbeitsgang wird als Vorschäumen bezeichnet. Die vorgeschäumten Styrolpolymerisate werden zwischengelagert und dann in einer druckfesten Form durch erneutes Erhitzen mit Dampf weiter expandiert, wobei, bedingt durch die Raumbegrenzung, die Teilchen miteinander zu einem dem Innenhohlraum der verwendeten Form entsprechenden Formkörper verschweißen. Dieser zweite Arbeitsgang wird als Ausschäumen bezeichnet. Der Formkörper wird innerhalb der Form solange abgekühlt, bis auch im Inneren die Temperatur unterhalb des Erweichungspunktes liegt. Entnimmt man den Formkörper vorzeitig der Form, so kann sich dieser verformen. Da schaumförmige Kunststoffe gute Isolatoren sind, werden zum Abkühlen der Form relativ lange Kühlzeiten benötigt. Man bezeichnet den Zeitraum, nach dem man frühestens den Formkörper entnehmen kann, ohne daß nachträgliche Verformung eintritt, üblicherweise als "Mindestformverweilzeit".

Es versteht sich von selbst, daß die Verarbeiter von expandierbarem Polystyrol aus wirtschaftlichen Gründen an kurzen Mindestformverweilzeiten interessiert sind. Daher hat es in der Vergangenheit nicht an Versuchen gefehlt, feinteilige expandierbare Styrolpolymerisate mit kurzen Mindestformverweilzeiten herzustellen. Der Literatur sind mehrere Wege zu entnehmen, die zur Herstellung von Polystyrolschäumen mit kurzen Mindestformverweilzeiten führen.

So wird empfohlen, Fettsäuren bzw. Fettsäurederivate in Konzentrationen von 0,1 bis 2 Gewichtsprozent, bezogen auf das Styrolpolymerisat, zur Erzielung einer kurzen Mindestformverweilzeit einzusetzen (US—PS 3 389 097, DE—AS 21 33 253, DE—OS 22 56 842).

Es ist auch weiterhin bekannt, verschiedene Kautschuk-Arten in Konzentrationen von 0,1 bis 2 Gewichtsprozent, bezogen auf das Styrolpolymerisat, zuzusetzen (US—PS 3 682 844, DE—OS 21 01 666, JP—AS 49 052 862, DE—OS 22 55 397, DE—OS 24 24 021).

Gemäb der FR—PS 15 30 701, der AT—PS 279 183 und der DE—PS 12 56 888 werden den Polymerisationsansätzen bromierte Verbindungen zugegeben, so daß die Bromverbindungen homogen verteilt sind.

Alle diese Verfahren haben aber den Nachteil, daß die eingesetzten Stoffe andere Verarbeitungseigenschaften des verschäumbaren Styrolpolymerisates negative beeinflussen. Fettsäuren bze. Fettsäurederivate und Kautschuke müssen zur Erzielung einer merkbaren Senkung der Mindestformverweilzeit in so hoher Konzentration zugesetzt werden, daß der Erweichungspunkt des verschäumbaren Styrolpolymerisates stark erniedrigt wird. Dies bringt sowohl Nachteile bei der Verarbeitung, z.B. Kleben des Vorschaumes, als auch eine Verringerung der Festigkeit des Endproduktes mit sich. Darüber hinaus wird wegen der hohen Kosten der Zusätze die Wirtschaftlichkeit des Verfahrens negativ beeinflußt.

Auch bei den zur Kühlzeiterniedrigung empfohlenen Bromverbindungen sind relativ hohe Konzentrationen von 0,02 bis 0,5 Gewichtsprozent erforderlich, um zu ausreichend kurzen Kühlzeiten zu gelangen. Solche Zusätze führen aber auch schon zu einer ungünstigen Beeinflussung der mechani-schen Eingenschaften des Schaumstoffes und insbesondere auch der Wärmeformbeständigkeit. Bromhaltige Verbindungen sind weiter sehr oft gesundheitsschädigend.

In der Vergangenheit wurden deshalb immer wieder Versuche unternommen, ohne Zusätze von Fremdstoffen auszukommen: So empfiehlt die DE—AS 15 04 577, die Perlen vor dem Verschäumen sehr schnell abzukühlen. Gemaß der FR—PS 15 00 623 soll durch eine Zwischenlagerung des Vorschaumes in den Perlen ein Unterdruck entstehen und so eine kurze Mindestformverweilzeit erreicht werden. Beide Verfahren haben sich aber in der Praxis nicht bewährt, da durch diese Maßnahmen keine ausreichend kurze Kühlzeit erreicht wird.

In der DE—OS 25 42 281 werden Zusätze von speziellen, gegen Hydrolyse empfindlichen Bromverbindungen empfohlen, die bereits in sehr geringen Konzentrationen wirksam sein sollen, wobei die Hydrolyseempfindlichkeit dargestellt wird durch die bei 100°C in bidestilliertem Wasser abgespaltene Menge Bromwasserstoff pro Äquivalent Brom pro Molekül und diese Menge 2,2 bis 30 Molprozent betragen soll. Bei genaueren Untersuchungen stellt sich jedoch heraus, daß dieses Material nicht hinreichend ist und diese Bromverbindungen praktisch nicht oder nur sehr mäßig wirksam sind. Dies ist leicht verständlich, da bei der Suspensionspolymerisation von Styrol ein ständiges Zerteilen und Zusammenfließen der in Tröpfchenform vorliegenden organischen Phase stattfindet (W. P. Hohenstein u. H. Mark, J. Polym. Sci. *1* (2) S. 138 (1946)). Dabei wird der bei der Hydrolyse entstehende Bromwasserstoff ständig von der organischen in die wäßrige Phase übergeführt, womit ein wesentlicher Teil der Bromverbindung in dem Styrolpolymerisat nicht wirksam werden kann. Außerdem wird das Abwasser mit Bromwasserstoff verunreinigt.

Aufgabe der Erfindung war es daher, die geschilderten Nachteile des Standes der Technik zu vermeiden.

Gegenstand der Erfindung sind feinteilige expandierbare Styrolpolymerisate zur Herstellung von Schaumstoffkörpern mit kurzen Mindestformverweilzeiten, die geringe Mengen organischer Bromverbindungen enthalten, wobei als Bromverbindungen 1,1,1,3 - tetrabrom - 3 - phenylpropen, trans - 1,1,2,3,4,4 - hexabrombuten - 2 oder cis - 1,1,2,3,4,4 - hexabrombuten in Mengen von 0,00005 bis <0,01 Gewichtsprozent, bezogen auf das Styrolpolymerisat, darin enthalten und in die Polymerkette eingebaut sind. Vorteilhaft sind die Bromverbindungen in Mengen von 0,0001 bis 0,005 Gewichtsprozent enthalten.

Es hat sich überraschend gezeigt, daß beim Einsatz dieser Bromverbindungen trotz der angewendeten niedrigen Konzentrationen aus den Styrolpolymerisaten feinzellige Schaumstoffe mit niedrigen Mindestformverweilzeiten herstellbar sind. Die Bromverbindungen sind aus dem fertigen Schaumstoff nicht extrahiebar. Genaue Untersuchungen zeigten, daß sie im Verlaufe Polymerisation durch eine Kettenübertragungsreaktion in die Polymerkette eingebaut werden. Bei Einsatz der Bromverbindungen in den erfindungsgemäßen niedrigen Konzentrationen ist ein Einfluß auf das Molekulargeweicht des Polystyrols nicht zu erkennen.

Wegen der äußerst geringen eingesetzten Mengen an Bromverbindungen ist es wichtig, daß diese ihre Wirkung in der organischen Phase des Polymerisationsansatzes entfalten und nicht beim Kontakt mit der wäßrigen Phase zersetzt werden. Die hydrolytische Verseifungsgeschwindigkeit der organischen Bromverbindungen wird folgendermaßen bestimmt: 1 g der Substanz wird zusammen mit 100 g bidestilliertem Wasser in einem druckfesten Gefäß aus rostfreiem Stahl 3 Stunden unter Rühren auf 100°C erhitzt. Nach dem Abkühlen auf Raumtemperatur wird die entstandene HBr-Menge durch potentiometrische Titration bestimmt. Die erfindungsgemäß geeignete Bromverbindungen entwickeln bei dieser Prüfung weniger als 1 Molprozent HBr pro Äquivalent Brom im Keimbildnermolekül.

Neben diesem Kriterium zeigen die Bromverbindungen, die bereits in den sehr niedrigen Konzentrationen wirksam sind, ein weiteres Merkmal. Dieses Merkmal beruht auf der Reaktionsfähigkeit der in der Verbindung enthaltenen Bromatome bei der durch Peroxide initiierten Styrolpolymerisation. Als Maß dafür verwendet man üblicherweise die Übertragungskonstante C, die durch die Gleichung

$$\frac{d\,\ddot{U}}{d\,M} = C\,\frac{\ddot{U}}{M}$$

definiert ist, wobei $\ddot{U}$ und M die Konzentrationen an Bromverbindung bzw. Monomeren sind. Die Messung derartiger Übertragungskonstanten ist in der Literatur häufig beschrieben. Für diese Messung der Übertragungskonstanten der erfindungsgemäß und vergleichsweise eingesetzten Bromverbindungen wurde eine gaschromatografische Methode (Makromol. Chemie *178*, 2249 bis 2255 (1977)) verwendet. Es stellte sich heraus, daß nur Bromverbindungen in den sehr niedrigen Konzentrationen, wie sie die Arbeitsweise der Erfindung erfordert, eine deutliche Senkung der Mindestformverweilzeit bewirken, wenn deren Übertragungskonstante in der Größenordnung der des Tetrabromkohlenstoffes liegt. Tetrabromkohlenstoff ist aber in derartig geringen Konzentrationen nicht wirksam, da er beim Erhitzen in wäßriger Phase innerhalb von 3 Stunden ca. 10 Mol-% HBr pro Äquivalent im Molekül verhandenen Brom abspaltet. Geeignete Substanzen sind demnach solche, die unter den oben genannten Prüfbedingungen weniger als 1 Molprozent HBr pro Äquivalent Brom im Molekül abspalten und gleichzeitig eine Kettenübertragungskonstante von mindestens 200 aufweisen. Diese Bedingungen werden von dem erfindungsgemäßen Verbindungen, 1,1,1,3 - tetrabrom - 3 - phenylpropen, trans - 1,1,2,3,4,4 - hexabrombuten - 2, cis - 1,1,2,3,4,4 - hexabrombuten - 2, vorzugsweise trans - 1,1,2,3,4,4 - hexabrombuten - 2, erfüllt.

Styrolpolymerisate im Sinne der Erfindung sind Polystyrol und Mischpolymerisate des Styrols, die mindestens 50% Styrol einpolymerisiert enthalten. Die Styrolpolymerisate enthalten in homogener Verteilung ein oder mehrere Treibmittel. Als Treibmittel eignen sich z.B. unter Normalbedingungen gasförmige oder flüssige Kohlenwasserstoffe oder Halogenkohlenwasserstoffe, die das Styrolpolymerisat nicht lösen und deren Siedepunkte unter dem Erweichungspunkt des Polymerisates liegen. Geeignete Treibmittel sind z.B. Propan, Butan, Pentan, Cyclopentan, Hexan, Cyclohexan oder Halogenkohlenwasserstoffe, wie Dichlordifluormethan, Methylenchloride usw. Auch Mischungen von Treibmitteln können in den Massen enthalten sein. Die Treibmittel sind in den Styrolpolymerisaten im allgemeinen in Mengen zwischen 3 und 15 Gew.-%, bezogen auf das Polymerisat, enthalten.

Das Polymerisat kann außerdem Zusatzstoffe wie Weichmacher, Stabilisatoren, Farbstoffe, Füllstoffe oder Flammschutzmittel enthalten.

Weiter können die erfindungsgemäßen, expandierbaren Polystyrole in bekannter Weise an der Oberfläche beschichtet sein, und zwar mit Substanzen zur Erreichung von Schwerentflammbarkeit, gegen Verklumpung beim Vorschäumen, gegen statische Aufladung usw.

Die expandierbarern Styrolpolymerisate werden durch Polymerisation in Gegenwart organischer Polymerisationsinitiatoren erhalten, die unter dem Einfluß von Wärme in polymerisationsauslösende Radikale zerfallen. Gebräuchlich sind z.B. Peroxide, wie Benzoylperoxid, Laurylperoxid oder tert.-butylperbenzoat, tert.-butylperoctoat bzw. Mischungen derselben sowie instabile Azoverbindungen, wie Azobisisobutyronitril. Die Initiatoren werden im allgemeinen in Mengen von 0,01 bis 1 Gew.-%, bezogen auf die Monomeren, eingesetzt. Die Art des zu verwendenden Initiators richtet sich nach der vorgesehenen Polymerisationstemperatur. Es ist vorteilhaft Mischungen von Initiatoren zu verwenden, wobei die Polymerisationstemperatur auf die entspechende Halbwertszeit des Initiators abgestimmt werden kann. Die Polymerisationstemperatur liegt in der Regel zwischen 60°C und 150°C, vorzugsweise zwischen 80°C und 120°C.

Die expandierbaren Styrolpolymerisate können in Perlform oder in beliebiger anderer Form vorliegen, wobei die Teilchen vorteil haft Durchmesser von 0,3 bis 3 mm aufweisen.

Die erfindungsgemäß eingesetzten Bromverbindungen sollen in dem feinteiligen expandierbaren Styrolpolymerisat in möglichst homogener Verteilung vorliegen bzw. zumindest am Anfang vorgelegen haben. Dies erreicht man dadurch daß die Bromverbindung in monomerem Styrol, gegebenenfalls mit anderen Monomeren, gelöst wird. Die Lösung wird anschließend in wäßriger Suspension polymerisiert, wobei das Treibmittel sowohl am Anfang, während, als auch am Ende der Polymerisation zugegeben werden kann. Es ist jedoch auch möglich, die Bromverbindungen zusammen mit dem Treibmittel zuzugeben, wobei es vorteilhaft ist, die im Treibmittel gelöste Bromverbindung während der ersten 2 Stunden der Polymerisation zuzugeben.

Die Mindestformverweilzeiten werden nach folgender Methode bestimmt: Die vorgeschäumten Styrolpolymerisatpartikel werden durch Bedampfen mit Wasserdampf in einer Form zu einem Formkörper verschweißt, in dessen Mittelpunkt eine Drucksonde angeordnet ist. Es wird die Zeit vom Beginn des Kühlens bis zu dem Zeitpunkt ermittelt, an dem der Druck im Inneren des Formkörpers auf 1,05 bar abgesunken ist. Erfahrungsgemäß hat sich gezeigt, daß bei diesem Druck die Formkörper gefahrlos entformt werden können. Die nach der Erfindung eingesetzten Bromverbindungen können in wesentlich geringeren Mengen als die des Standes der Technik eingesetzt werden.

Beispiel

In einem druckfesten Rührkessel aus korrosionsfreiem Stahl wurde jeweils eine Mischung aus 100 Gewichtsteilen vollentsalztes Wasser, 100 Gewichtsteilen Styrol, 0,40 Gewichtsteilen Benzoylperoxid, 0,1 Gewichtsteil tert.- butylperbenzoat sowie den in der Tabelle 1 genannten Zusätzen in den dort angegebenen Mengen unter Rühren auf 90°C erhitzt. Nach 2 Stunden bei 90°C wurden 5 Gewichtsteile einer 2% igen wäßrigen Lösung von Polyvinyl-alkohol mit einer Verseifungszahl von 140 zugegeben. Nach weiteren 2 Stunden bei 90°C erfolgte die Zugabe von 7 Gewichtsteilen Pentan. Der Ansatz wurde nach einer weiteren Stunde bei 90°C auf 120°C aufgeheizt und 6 Stunden bei dieser Temperatur gehalten.

Nach Beendigung des Polymerisationszyklus wurde abgekühlt, das entstandene Perlpolymerisat von der wäßrigen Phase abgetrennt, getrocknet und gesiebt.

Die Perlfraktion zwischen 1 und 2 mm Durchmesser wurde in einem kontinuierlichen Rührvorschäumer Typ Rauscher mit strömendem Wasserdampf auf ein Schüttgewicht von 15 g/l vorgeschäumt, 24 Stunden Zwischengelagert und anschließend in einer 500 1-Blockform Typ Rauscher ausgeschäumt. Die. in Tabelle 1 angegebenen Mindestformverweilzeiten wurden nach der oben angegebenen Methode bestimmt.

Tabelle 1

| Zusatz | Zusatzmenge Gew.-% | Verseifungs-geschwindigk. des Zusatzes Mol-% | Kettenüber-tragungs-konstante C des Zusatzes | Mindest-formver-weilzeit (min) |
|---|---|---|---|---|
| ohne | — | — | — | 50 |
| Erfindungsbeispiele | | | | |
| trans-1.1.2.3.4.4-Hexabrombuten-2 | 0,0001 | 0,2 | 250 | 14 |
| trans-1.1.2.3.4.4-Hexabrombuten-2 | 0,0005 | 0,2 | 250 | 7 |
| cis-1.1.2.3.4.4-Hexabrombuten-2 | 0,0001 | 0,2 | 250 | 7 |
| 1.1.1.3-tetrabrom-3-phenylpropen | 0,0001 | 0,5 | 230 | 8 |
| Vergleichsbeispiele | | | | |
| Hexabromcyclododecan | 0,001 | 0,5 | 40 | 50 |
| Hexabromcyclododecan | 0,02 | 0,5 | 40 | 20 |
| Ethoxitetrabromoctan | 0,001 | 2,5 | 80 | 20 |
| Ethoxitetrabromoctan | 0,02 | 2,5 | 80 | 10 |
| Tetrabromkohlenstoff | 0,001 | 12 | 250 | 50 |

**Patentansprüche**

1. Feinteilige expandierbare Styrolpolymerisate zur Herstellung von Schaumstoffkörpern mit kurzer Mindest-formverweilzeit, geringe Mengen organischer Bromverbindungen enthaltend, dadurch gekennzeichnet, daß als Bromverbindungen 1,1,1,3 - tetrabrom - 3 - phenylpropen, trans - 1,1,2,3,4,4 - hexabrombuten - 2 oder cis - 1,1,2,3,4,4 - hexabrombuten - 2 in Mengen von 0,00005 bis <0,01 Gewichtsprozent bezogen auf das Styrolpolymerisat, darin enthalten und in die Polymerkette eingebaut sind.

2. Feinteilige expandierbare Styrolpolymerisate nach Anspruch 1, dadurch gekennzeichnet, daß sie 0,0001 bis 0,005 Gewichtsprozent der organischen Bromverbindungen enthalten.

3. Feinteilige expandierbare Styrolpolymerisate nach den Ansprüchen 1 und 2, dadurch gekennzeichnet, daß die eingesetzte Bromverbindung trans - 1,1,2,3,4,4 - Hexabrombuten - (2) ist.

4. Verfahren zur Herstellung der feinteiligen expandierbaren Styrolpolymerisate nach den Ansprüchen 1 bis 3 durch Suspensionspolymerisation in Gegenwart radikalbildender Initiatoren, dadurch gekennzeichnet, daß man die organischen Bromverbindungen gelöst in monomerem Styrol vor oder zu Beginn der Polymerisation zusetzt.

5. Verwendung der nach Anspruch 4 erhaltenen feinteiligen expandier baren Styrolpolymerisate zur Herstellung von Schaumstofforpern mit kurzer Mindestformverweilzeit.

**Claims**

1. A finely divided expandable styrene polymer for the manufacture of foamed articles with short minimum residence times in the mould, which polymer contains a small amount of an organic bromine compound, characterised in that 1,1,1,3 - tetrabromo - 3 - phenylpropene, trans - 1,1,2,3,4,4 - hexabromobutene - 2 or cis - 1,1,2,3,4,5 - hexabromobutene - 2 is used as the bromine compound in an amount of 0.00005 to less than 0.01 per cent by weight, based on the styrene polymer, and is incorporated into the polymer chain.

2. A finely divided expandable styrene polymer according to claim 1, characterised in that it contains 0.0001 to 0.005 per cent by weight of the organic bromine compound.

3. A finely divided expandable styrene polymer according to claim 1 or 2 characterised in that the incorporated bromine compound is trans - 1,1,2,3,4,4 - hexabromobutene - 2.

4. A process for the manufacture of a finely divided expandable styrene polymer according to any of claims 1 to 3 by suspension polymerisation in the presence of a free radical-forming initiator, characterised in that the organic bromine compound dissolved in styrene monomer is introduced before or at the beginning of the polymerisation.

5. The use of the finely divided expandable styrene polymer obtained according to claim 4 for the manufacture of foamed articles with short minimum residence times in the mould.

**Revendications**

1. Produits de polymérisaton de styrène expansibles en fines particules pour la fabrication de pièces en matière alvéolaire avec un court temps de séjour minimal dans le moule, contenant de petites quantités de composés organiques bromés et caractérisés par le fait que, comme composés bromés, ils renferment, incorporés à la chaine polymère, du 1,1,1,3 - tétrabromo - 3 - phénylpropène, du trans - 1,1,2,3,4,4 - hexabromobutène - 2 - ou du cis - 1,1,2,3,4,4 - hexabromobutène - 2 à raison de 0,00005 à moins de 0,01% en poids relativement au produit de polymérisation de styrène.

2. Produits de polymérisation de styrène expansibles en fines particules selon la revendication 1, caractérisés par le fait qu'ils contiennent de 0,0001 à 0,005% en poids des composés organiques bromés.

3. Produits de polymérisation de styrène expansibles en fines particules selon les revendications 1 et 2, caractérisés par le fait que le composé bromé introduit est le trans - 1,1,2,3,4,4 - hexabromobutène - 2.

4. Procédé pour la fabrication de produits de polymérisation de styrène expansibles en fines particules selon les revendications 1 à 3, par polymérisation en suspension en présence d'amorceurs formateurs de radicaux, caractérisé par le fait que l'on ajoute les composés organiques bromés dissous dans du styrène monomère avant la polymérisation ou au début de celle-ci.

5. Application des produits de polymérisation de styrène expansibles en fines particules obtenus selon la revendication 4 à la fabrication de pièces en matière alvéolaire avec un court temps de séjour minimal dans le moule.